# EUROPEAN PATENT SPECIFICATION

(11) **EP 4 116 336 B1**
(45) Date of publication and mention of the grant of the patent: **01.04.2026**
(21) Application number: 22183965.7
(22) Date of filing: 08.07.2022
(51) Int. Cl.: C08C 19/04, C08C 19/08, C08J 11/10

(54) **RUBBER PRODUCT DEVULCANIZATION METHOD AND PRODUCT**
KAUTSCHUKPRODUKTDEVULKANISIERUNGSVERFAHREN UND -PRODUKT
PROCÉDÉ DE DÉVULCANISATION DE PRODUIT EN CAOUTCHOUC ET PRODUIT

(30) Priority: 09.07.2021 US 202163219912 P
(43) Date of publication of application: 11.01.2023
(73) Proprietor: The Goodyear Tire & Rubber Company, Akron, OH 44316 (US)
(72) Inventor: WIRTZ, Marcel, 66130 Saarbrücken (DE); KOSTER, Georges, 8436 Steinfort (LU)
(74) Representative: Kutsch, Bernd

(56) References cited:
- EP-A1- 1 038 909
- EP-A2- 2 947 116
- EP-B1- 1 442 076
- CN-A- 111 205 507
- GB-A- 535 531
- US-A- 4 161 464
- US-A1- 2006 116 431
- US-A1- 2012 004 331
- US-A1- 2021 087 343
- XIE YANLING ET AL: "High scission of butadiene rubber vulcanizate under thermo-oxidation", POLYMER DEGRADATION AND STABILITY, BARKING, GB, vol. 167, 31 July 2019 (2019-07-31), pages 292 - 301, XP085770466, ISSN: 0141-3910, [retrieved on 20190731], DOI: 10.1016/J.POLYMDEGRADSTAB.2019.07.015
- DONG RUIKUN ET AL: "Chemical and microscopic investigation of co-pyrolysis of crumb tire rubber with waste cooking oil at mild temperature", WASTE MANAGEMENT, ELSEVIER, NEW YORK, NY, US, vol. 79, 15 August 2018 (2018-08-15), pages 516 - 525, XP085508882, ISSN: 0956-053X, DOI: 10.1016/J.WASMAN.2018.08.024
- CHENG XIANGYUN ET AL: "Liquefaction of ground tire rubber at low temperature", WASTE MANAGEMENT, ELSEVIER, NEW YORK, NY, US, vol. 71, 17 October 2017 (2017-10-17), pages 301 - 310, XP085302075, ISSN: 0956-053X, DOI: 10.1016/J.WASMAN.2017.10.004

## Description

### Background of the Invention

Rubber products, such as tires, belts, hoses, tubes, air springs, windshield wiper blades, etc. contain vulcanized rubber. Vulcanization of rubber in general designates processes for hardening rubbers, in particular the treatment of natural rubber with sulfur, initially invented by Charles Goodyear. When rubber is vulcanized with sulfur, the linear macromolecules of raw rubber (rubber chains) are turned into a three-dimensional network, wherein the crosslinks include C-S (carbon-sulfur) and S-S (sulfur-sulfur) covalent bonds. During vulcanization, C-H bonds on allylic positions (or "cure sites") of the rubber chains are replaced by sulfur bridges (with one or more sulfur atoms) that extend to a cure site of another rubber chain.

Sulfur vulcanization remains the most common vulcanization technique. The tire industry mostly uses polyisoprene (such as in natural rubber) and styrenebutadiene rubber (SBR). Vulcanized rubber shows high strength, high elasticity, high wear resistance, and corrosion resistance.

Rubber waste has been relatively difficult to recycle because the cured rubber network structure is neither soluble nor capable of being melted. Waste rubber is available in immense quantities. The recycling of rubber therefore has enormous potential in terms of pollution avoidance and for saving raw materials. Pyrolysis and devulcanization techniques could facilitate recycling.

One process used for the reduction of used tires that include synthetic rubbers is pyrolysis. In a typical pyrolysis process, shredded tires are subjected to temperatures between 600°C and 900°C in an oxygen-free atmosphere or under a vacuum. Pyrolysis produces light oils and char where the char contains carbon black and pyrolytic carbon formed by the carbonization of rubber hydrocarbon. A shortcoming of pyrolysis is that its end products are of little economic value compared to the original rubber and carbon black.

Devulcanization processes break S-S and C-S bonds of the sulfur bridges that crosslink the rubber chains, to undo, totally or partially, the three-dimensional network formed during vulcanization. This requires the introduction of energy into the material. The process conditions are ideally chosen such that S-S and C-S bonds are cleaved while the C-C bonds are left intact. In practice, however, ideal selectivity cannot be achieved because the bond-dissociation energies of the S-S and C-S bonds (227 and 273 kJ/mol, respectively) are relatively close to bond-dissociation energy of the C-C bonds (348 kJ/mol).

US-A-2004/214906 A1 proposes a method of reducing vulcanized rubber. The method comprises the steps of heating the rubber, wherein the rubber includes synthetic rubber, in the presence of a solvent, wherein the solvent includes water to a temperature below a critical temperature of the solvent, providing a pressure that is at least equal to a saturated vapor pressure of the solvent at the temperature and maintaining the temperature and the pressure for a time sufficient to devulcanize the rubber and produce a reaction product that is primarily a solid phase and includes rubber hydrocarbon. The process is carried out in a reactor from which air is purged before the desired reaction temperature is attained.

WO 01/23464 A1 relates to a process for devulcanizing a rubber, which rubber is obtained by vulcanizing with the aid of a sulfur-containing compound a copolymer which contains ethylene monomer units, monomer units of an α-olefin and monomer units of a polyunsaturated compound. The rubber is heated in an atmosphere that is substantially free of oxygen to such elevated temperature that devulcanization occurs and a recyclable product is obtained.

US-A-2013/023595 A1 relates to a method and apparatus for obtaining regenerated rubbers from vulcanized crumb rubber, such as rubber from scrap. The apparatus is a thermokinetic mixer having the particularity to have an airtight stationary chamber with inner non-uniform surface. The method comprises the steps of raising the speed of the rotor shaft in order to increase a temperature of a mixture made of vulcanized crumb rubber and a lubricant, such as oil, until a devulcanizing temperature is reached; and reducing the temperature of the mixture to a lower temperature during a second period of time.

US-B-6,924,319 relates to a devulcanization product of comminuted scrap rubber of rubber granules, in which the sulfur bridges of the rubber granule surface are broken and activated for a new vulcanization. The product is produced by treating the rubber granules to swell the rubber structure of the granule surface and by mixing the treated rubber granules with a devulcanization formulation, acting mechanically and chemically reductively on the rubber granules, in a heating and cooling mixer combination. The rubber granules and the devulcanization formulation are heated to a temperature of 105°C-150°C and subsequently cooled.

Xie Y. et al., Polymer Degradation and Stability, 167 (2019), pages 292-301 describe a method for the devulcanization of rubber products using a swelling agent. The method comprises heating the swelling agent and the rubber product.

EP 1 442 076 B1 discloses a process in accordance with the preamble of claim 1.

### Summary of the Invention

The invention relates to a method in accordance with claim 1.

Dependent claims refer to preferred embodiments of the invention.

According to a preferred aspect of the invention, a method for devulcanization of rubber products comprises: providing vulcanized rubber product particles containing rubber chains with sulfur crosslinks; mixing the rubber product particles with a relatively high-boiling swelling agent, wherein the relatively high-boiling swelling agent has a boiling point of at least 130°C at a pressure of 1 bar, wherein the swelling agent comprises a relatively high-boiling processing oil or solvent; and heating the mixture of the rubber product particles and the relatively high-boiling swelling agent to a temperature of at least 170°C in the presence of oxygen so as to break the sulfur crosslinks of the rubber product particles.

It will be appreciated that the heating may be maintained as long as needed for the desulfurization to complete to the desired degree.

According to an embodiment, the rubber chains (rubber macromolecules) are separated from the relatively high-boiling swelling agent after breakage of the sulfur crosslinks. Any suitable physical and/or chemical separation process, such as, e.g., distillation under ambient or reduced pressure, centrifugation, viscosity variation at reduced temperature, etc., may be used to that effect. It will be appreciated that the relatively high-boiling swelling agent may be reused after separation and fed back to the process.

The method comprises exerting shear forces on the mixture of the rubber product particles and the relatively high-boiling swelling agent during the heating. Shearing of the mixture could, e.g., be effected by stirring, kneading, etc. the mixture.

The temperature to which the mixture of the rubber product particles and the relatively high-boiling swelling agent is heated is at least 170°C.

According to a preferred embodiment, the vulcanized rubber product particles have sizes less than 10 mm, preferably less than 7 mm and still more preferably, less than 5 mm. The vulcanized rubber product particles are preferably 3.5 mesh or 4 mesh, or even smaller.

Using excess swelling agent may prove advantageous. According to a preferred embodiment, the mixture contains the rubber product particles and the relatively high-boiling swelling agent in a weight ratio of 1 to at least 5, preferably in a weight ratio of 1 to at least 10.

It will be understood that any type of mill or mixing device capable of handling suspensions could be used in embodiments of the invention. According to a preferred embodiment, the mixing and the heating are carried out in at least one of a batch reactor, an extruder, a twin screw extruder, a tandem extruder, a Banbury mixer and a continuous-flow reactor.

The relatively high-boiling swelling agent is selected such that a degree of swelling of the rubber product particles in the relatively high-boiling swelling agent is at least 150% to 500% by volume. In other words, 150% ≤ V_{swollen}/V_{unswollen} ≤ 500%, where V_{unswollen} is the volume of the unswollen rubber product particles and V_{swollen} is the volume of the swollen rubber product particles.

According to a preferred embodiment of this invention, the vulcanized rubber product particles are sourced from used tires.

The heating of the mixture may be carried out in aerobic conditions, i.e., in the presence of air. Oxygen is adduced to the mixture while being heated in a forced flow. The oxygen is preferably adduced in the gaseous state, as a pure gas or within a mixture of one or more other gases. Alternatively, oxygen could be adduced in other forms, such as, e.g., as dissolved oxygen.

According to a second preferred aspect of the invention, a method for devulcanization of rubber is proposed. This method comprises: providing vulcanized rubber particles containing rubber chains with sulfur crosslinks; mixing the rubber particles with a relatively high-boiling swelling agent in a weight ratio of 1 to at least 5, wherein the relatively high-boiling swelling agent has a boiling point of at least 130°C at a pressure of 1 bar, wherein the swelling agent comprises a relatively high-boiling processing oil or solvent that entails a degree of swelling of the rubber particles in the relatively high-boiling swelling agent of at least 150% to 500% by volume; and heating the mixture of the rubber particles and the relatively high-boiling swelling agent to a temperature of at least 170°C while exposing the mixture to oxygen, so as to break the sulfur crosslinks of the rubber particles.

The temperature to which the mixture of the rubber particles and the relatively high-boiling swelling agent is heated amounts to at least 170°C.

According to a preferred embodiment of this invention, the vulcanized rubber particles have sizes less than 10 mm in diameter, preferably less than 7 mm and still more preferably, less than 5 mm. The vulcanized rubber particles are preferably 3.5 mesh or 4 mesh, or even smaller.

According to a preferred embodiment of this invention, the mixture contains the rubber particles and the relatively high-boiling swelling agent in a weight ratio of 1 to at least 7, 8 or 10.

According to a preferred embodiment, the mixture is exposed to an oxygen-containing gas or gas mixture (such as, e.g., air) during the heating.

A further preferred aspect of the invention relates to a method for the recycling of tires. A tire recycling method according to this aspect comprises: shredding the tires so as to obtain tire particles containing rubber chains crosslinked by sulfur crosslinks; mixing the tire particles with a relatively high-boiling swelling agent in a weight ratio of 1 to at least 5, wherein the relatively high-boiling swelling agent has a boiling point of at least 130°C at a pressure of 1 bar, wherein the swelling agent is selected to give rise to a degree of swelling of the tire particles in the relatively high-boiling swelling agent of at least 150% to 500% by volume; and heating the mixture of the tire particles and the relatively high-boiling swelling agent to a temperature of at least 170°C in the presence of oxygen so as to break the sulfur crosslinks and to release the rubber chains.

According to a preferred embodiment of this invention, tires are shredded to a particle size of less than 10 mm, preferably less than 7 mm, and still more preferably, less than 5 mm, e.g., 3.5 mesh or 4 mesh.

The temperature to which the mixture of the rubber product particles and the relatively high-boiling swelling agent is heated amounts to at least 170°C.

According to a preferred embodiment, the mixture contains the tire particles and the relatively high-boiling swelling agent in a weight ratio of 1 to at least 7, 8 or 10.

According to a preferred embodiment, the mixture is exposed to an oxygen-containing fluid flow during the heating.

According to various preferred aspects of the invention, only heat, swelling agent (such as processing oil or solvent) and air are required to desulfurize cured rubber and to dissolve the sulfur network. It will be appreciated that no aggressive chemicals are needed in the process.

In the present document, the verb "to comprise" and the expression "to be comprised of" are used as open transitional phrases meaning "to include" or "to consist at least of". Unless otherwise implied by context, the use of singular word form is intended to encompass the plural, except when the cardinal number "one" is used: "one" herein means "exactly one". Ordinal numbers ("first", "second", etc.) are used herein to differentiate between different instances of a generic object; no particular order, importance or hierarchy is intended to be implied by the use of these expressions. Furthermore, when plural instances of an object are referred to by ordinal numbers, this does not necessarily mean that no other instances of that object are present (unless this follows clearly from context).

The term "diameter" means the largest distance that can be found between two opposite parallel lines tangent to the boundary of the particle being considered.

The term "mesh", as used herein, refers to US mesh sizes. For instance, particles which are 3.5 mesh all pass through a 3.5 mesh standard sieve (ASTM E11:01) having openings of 5.6 mm (0.22 in).

### Detailed Description of Preferred Embodiments

By way of example, preferred embodiments of the invention will now be described in more detail.

According to preferred embodiments of the invention, ground rubber sourced from used vehicle tires is used. The rubber particles may be obtained by shredding used tires. Any suitable comminution process may be used to that effect. For instance, cryogenic grinding of the scrap tire parts could be employed. Steel and textile components of the tires are preferably removed at some point in the comminution process but that is not a requirement for the devulcanization process according to the invention. The rubber particles input to the devulcanization process are preferably 3.5 mesh and more finely ground rubber particles (e.g., 10 mesh, 18 mesh or even 35 mesh) are preferred.

It is worthwhile noting that apart from the crosslinked rubber macromolecules, rubber particles obtained from used tires contain other constituents, e.g., carbon black (typically around 30% by weight after removal of the steel), stearic acid, zinc oxide and other additives.

The rubber particles are mixed with a relatively high-boiling swelling agent. Examples include mineral processing oils, heat transfer fluids (e.g., dibenzyl toluene available as Jarytherm DBT from Total or Marlotherm from Eastman) or solvents, such as, e.g., xylene. The swelling agent may also comprise a combination of different compatible liquids. The swelling agent causes the rubber chains to stretch and provokes a global loosening of the rubber network. This leads to a more efficient energy transfer and a reduction of the energy necessary to break the sulfur bridges. The swelling agent is selected to give rise to a degree of swelling of the tire particles in the relatively high-boiling swelling agent of at least 150% to 500% by volume.

In laboratory embodiments of the inventive process, the weight ratio of swelling agent to rubber particles was chosen higher than 10:1. In industrial-scale applications, the weight ratio is expected to be lower. Nevertheless, there will be an excess of swelling agent in comparison with the rubber particles.

Heating may be effected in several ways. In the mentioned laboratory embodiments, the mixture was put in a triple-neck flask and heated under stirring in an oil bath or on a heating plate. One of the necks was used to introduce a digital thermometer and the other necks were used for generating an airflow in the flask. Alternative heating methods, e.g., using process-caused frictional heat in an extruder, can also be used. Heat energy is supplied to reach and maintain a temperature of 170°C. In these conditions, C-S and S-S bonds are broken. Sulfur is oxidized and thus progressively eliminated as a reaction product. As the devulcanization process is ongoing, some vulcanization reactions may take place in parallel, using the released and not yet eliminated sulfur. However, the devulcanization reactions outweigh the vulcanization reactions, as the relatively high amounts of swelling agent form an environment rather unfavorable to (re- )vulcanization. When the rubber network is swollen, distances between cure sites are, on average, higher, leading to reduced probability that sulfur bridges can form. Furthermore, the formation of new sulfur bridges is hindered as reactive sulfur becomes more and more scarce due to oxidation.

The mixture of rubber particles and the relatively high-boiling swelling agent is heated during a time sufficient for desulfurization. The duration of the heating may be determined in advance by making tests. Alternatively, the progress of the desulfurization reaction and/or the oxidation reaction could be monitored, e.g., by measuring the mass flow of reaction products such as sulfate, SO₂, etc.

During the devulcanization process, the microstructure of the rubber chains may change. For instance, some of the rubber chains may be shortened, due to cleavage of C-C bonds. Also, the cis- and trans- microstructure contents of the rubber chains may change.

After the devulcanization, the rubber chains are preferably separated from the relatively high-boiling swelling agent.

### Example 1

In this experiment, 0.5 g of tire particles (18 mesh) were mixed with 10 ml of mineral oil (NYTEX 810, from Nynas) in an open beaker and heated on a heating plate under stirring. The temperature of the heating plate was maintained at 200°C for 20 minutes. Visual inspection of the sample showed that all rubber particles had been dissolved. The initial sulfur content of the tire particles was 1.8 % by weight. After desulfurization, the sulfur content had dropped to 0.2% by weight. Further filtration did not change the residual sulfur content.

### Example 2

In this procedure, 0.5 g of tire particles (18 mesh) were mixed with 10 ml of mineral oil (type, manufacturer) in a 3-neck flask and heated under stirring in an oil bath. The middle neck was used to probe the temperature of the mixture, whereas the outer necks were used to create a flow of air through the flask. The temperature of the heating plate was maintained at 180°C for 20 minutes. Visual inspection of the sample showed that all rubber particles had been dissolved. GPC (gel permeation chromatography) data showed a shortening of the rubber chains in the devulcanized rubber compared to the original rubber. Furthermore, changes in the cis-trans isomerization and in the blockiness of the polymer groups of the polymer chains were obtained.

### Example 3 (Comparative Example)

The experiment was conducted as a comparative example and utilized the procedure of Example 2, except that the flask was purged of oxygen prior to heating and an oxygen-free nitrogen flow was maintained in the flask. Visual inspection of the sample showed that rubber particles remained present in the mixture.

## Claims

1. A method for devulcanization of rubber products, comprising:
providing vulcanized rubber product particles containing rubber chains with sulfur crosslinks;
mixing the rubber product particles with a swelling agent having a boiling point of at least 130°C at a pressure of 1 bar, the swelling agent comprising a processing oil or solvent; and
heating the mixture of the rubber product particles and the swelling agent in the presence of oxygen so as to at least partially or fully break the sulfur crosslinks in the rubber product particles;
wherein the temperature to which the mixture of the rubber product particles and swelling agent is heated amounts to at least 170°C and shear forces are exerted on the mixture of the rubber product particles and the swelling agent during the heating;
**characterized in that** the swelling agent is selected such that a degree of swelling of the rubber product particles in the swelling agent is in a range of from 150% to 500% by volume and **in that** oxygen is furnished to the mixture while being heated in a forced flow.

2. The method of claim 1, further comprising separating the rubber chains from the swelling agent after breakage of the sulfur crosslinks.

3. The method of at least one of the previous claims, wherein the temperature to which the mixture of the rubber product particles and swelling agent is heated amounts to at least 200°C.

4. The method of at least one of the previous claims, wherein the vulcanized rubber product particles have sizes less than 10 mm or less than 5 mm.

5. The method of at least one of the previous claims, wherein the mixture contains the rubber product particles and the swelling agent at a weight ratio in a range of from 1 to 5 or more, alternatively in a range of from 1 to 7 or more or in a range of from 1 to 10 or more.

6. The method of at least one of the previous claims, wherein the mixing and the heating are carried out in at least one of a batch reactor, an extruder, a twin screw extruder, a tandem extruder, a Banbury mixer and a continuous-flow reactor.

7. The method of at least one of the previous claims, wherein the vulcanized rubber product particles are sourced from used tires or are tire particles, such as shredded tire particles.

## Patentansprüche

1. Verfahren zur Devulkanisierung von Produkten auf Basis von Kautschuk, wobei das Verfahren Folgendes umfasst:
das Bereitstellen von Teilchen eines Produkts auf Basis von Kautschuk, die Kautschukketten enthalten, die Disulfidbrücken umfassen ;
das Mischen der Teilchen des Kautschukprodukts mit einem Quellmittel, dessen Siedepunkt bei mindestens 130° C unter einem Druck von 1 bar beträgt; wobei das Quellmittel ein Lösungsmittel oder ein Kautschukprozessöl umfasst; und
das Erhitzen der Mischung aus den Teilchen des Kautschukprodukts und dem Quellmittel in Gegenwart von Sauerstoff derart, dass die Disulfidbrücken in den Teilchen des Kautschukprodukts mindestens teilweise oder vollständig aufgebrochen werden ;
wobei die Temperatur, auf die die Mischung aus den Teilchen des Produkts auf Basis von Kautschuk und dem Quellmittel erhitzt wird, mindestens 170°C beträgt und während des Erhitzens Scherkräfte auf die Mischung aus den Teilchen des Produkts auf Basis von Kautschuk und dem Quellmittel ausgeübt werden;
**dadurch gekennzeichnet, dass** das Quellmittel derart ausgewählt ist, dass ein Quellungsgrad der Teilchen des Produkts auf Basis von Kautschuk in dem Quellmittel in einem Bereich von 150 bis 500 Vol.-% liegt; und dadurch, dass der Mischung Sauerstoff zugeführt wird, während sie durch zwangsgeführte Strömung erhitzt wird.

2. Verfahren nach Anspruch 1, das ferner das Trennen der Kautschukketten von dem Quellmittel nach dem Aufbrechen der Disulfidbrücken umfasst.

3. Verfahren nach mindestens einem der vorhergehenden Ansprüche, wobei die Temperatur, auf die die Mischung aus den Teilchen des Produkts auf Basis von Kautschuk und dem Quellmittel erhitzt wird, mindestens 200°C beträgt.

4. Verfahren nach mindestens einem der vorhergehenden Ansprüche, wobei die Teilchen des Produkts auf Basis von Kautschuk in einem vulkanisierten Zustand Abmessungen aufweisen, die weniger als 10 mm oder weniger als 5 mm betragen.

5. Verfahren nach mindestens einem der vorhergehenden Ansprüche, wobei die Mischung die Teilchen des Produkts auf Basis von Kautschuk und das Quellmittel in einem Gewichtsverhältnis enthält, das in dem Bereich von 1 bis 5 oder mehr liegt, alternativ in einem Bereich von 1 bis 7 oder mehr oder in einem Bereich von 1 bis 10 oder mehr.

6. Verfahren nach mindestens einem der vorhergehenden Ansprüche, wobei das Mischen und Erhitzen in mindestens einer Vorrichtung durchgeführt wird, die ausgewählt ist aus einem Chargenreaktor, einem Extruder, einem Extruder vom Doppelschneckentyp, einem Extruder vom Tandemtyp, einem Banburymischer für Kautschuk und einem Reaktor vom Durchflusstyp.

7. Verfahren nach mindestens einem der vorhergehenden Ansprüche, wobei die Teilchen des Produkts auf Basis von Kautschuk im vulkanisierten Zustand von Reifen stammen oder Teilchen von Reifen darstellen, wie etwa Teilchen von Reifen, die geschreddert worden sind.

## Revendications

1. Procédé destiné à la dévulcanisation de produits à base de caoutchouc, qui comprend le fait de :
procurer des particules d'un produit à base de caoutchouc, qui contiennent des chaînes de caoutchouc qui comprennent des ponts disulfures ;
mélanger les particules du produit à base de caoutchouc avec un agent gonflant dont le point d'ébullition s'élève à au moins 130° C sous une pression de 1 bar ; dans lequel l'agent gonflant comprend un solvant ou une huile de process ; et
chauffer le mélange des particules du produit à base de caoutchouc et de l'agent gonflant en présence d'oxygène d'une manière telle que l'on rompt au moins de manière partielle ou de manière totale les ponts disulfures dans les particules du produit à base de caoutchouc ;
dans lequel la température à laquelle on chauffe le mélange des particules du produit à base de caoutchouc et de l'agent gonflant s'élève à au moins 170° C et des forces de cisaillement s'exercent sur le mélange des particules du produit à base de caoutchouc et de l'agent gonflant au cours du chauffage ;
**caractérisé en ce que** l'agent gonflant est choisi d'une manière telle qu'un degré de gonflement des particules du produit à base de caoutchouc dans l'agent gonflant se situe dans une plage allant de 150 % à 500 % en volume ; et **en ce que** de l'oxygène est fourni au mélange pendant que ce dernier est chauffé par flux forcé.

2. Procédé selon la revendication 1, qui comprend en outre le fait de séparer les chaînes de caoutchouc de l'agent gonflant après la rupture des ponts disulfures.

3. Procédé selon au moins une des revendications précédentes, dans lequel la température à laquelle on chauffe le mélange des particules du produit à base de caoutchouc et de l'agent gonflant s'élève à au moins 200° C.

4. Procédé selon au moins une des revendications précédentes, dans lequel les particules de produit à base de caoutchouc à l'état vulcanisé possèdent des dimensions qui sont inférieures à 10 mm ou inférieures à 5 mm.

5. Procédé selon au moins une des revendications précédentes, dans lequel le mélange contient les particules du produit à base de caoutchouc et l'agent gonflant dans un rapport en poids qui se situe dans une plage allant de 1 à 5 ou plus, en variante dans une plage allant de 1 à 7 ou plus ou dans une plage allant de 1 à 10 ou plus.

6. Procédé selon au moins une des revendications précédentes, dans lequel le mélange et le chauffage sont mis en œuvre dans au moins dispositif qui est choisi parmi un réacteur à fonctionnement discontinu, une extrudeuse, une extrudeuse du type à double vis, une extrudeuse du type en tandem, un mélangeur du type Banbury et un réacteur du type à flux continu.

7. Procédé selon au moins une des revendications précédentes, dans lequel les particules de produit à base de caoutchouc à l'état vulcanisé sont issues de bandages ou représentent des particules de bandages, telles que des particules de bandages qui ont été déchiquetées.
